(19) Europäisches Patentamt
European Patent Office
Office européen des brevets

(11) **EP 4 664 792 A1**

(12) **EUROPEAN PATENT APPLICATION**
published in accordance with Art. 153(4) EPC

(43) Date of publication:
**17.12.2025   Bulletin 2025/51**

(21) Application number: **24769686.7**

(22) Date of filing: **04.02.2024**

(51) International Patent Classification (IPC):
***H04B 10/61*** *(2013.01)*

(52) Cooperative Patent Classification (CPC):
**H04B 10/61; H04L 5/00**

(86) International application number:
**PCT/CN2024/075739**

(87) International publication number:
**WO 2024/187990 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **14.03.2023   CN 202310268458**

(71) Applicant: **Huawei Technologies Co., Ltd.
Shenzhen, Guangdong 518129 (CN)**

(72) Inventor: **XING, Zhenping
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54)   **DATA TRANSMISSION METHOD AND APPARATUS, DEVICE, AND STORAGE MEDIUM**

(57)   Embodiments of this application disclose a data transmission method and apparatus, a device, and a storage medium, and relate to the field of optical communication technologies. In a coherent optical transmission system with dual-polarization transmission and single-polarization reception, a transmit end sends a data frame including a subframe including reference pilot information, a data unit, and a corresponding redundant code, where a 1st subframe in each data frame includes more reference pilot symbols than other subframes. A receive end performs parameter adjustment on a correction function based on pilot information and the reference pilot information in the received data frame. This may increase a convergence speed of parameter adjustment, so that parameter adjustment on the correction function can adapt to a rapid change of interference in a more timely manner, thereby well reducing or even eliminating interference introduced in a data transmission process.

FIG. 5

## Description

This application claims priority to Chinese Patent Application No. 202310268458.4, filed on March 14, 2023 and entitled "DATA TRANSMISSION METHOD AND APPARATUS, DEVICE, AND STORAGE MEDIUM", which is incorporated herein by reference in its entirety.

## TECHNICAL FIELD

This application relates to the field of optical communication technologies, and in particular, to a data transmission method and apparatus, a device, and a storage medium.

## BACKGROUND

In a coherent optical communication system with dual-polarization transmission and single-polarization reception, various types of interference are introduced during transmission of an optical signal in an optical fiber. In a related technology, a transmit end generates a redundant code for a data unit, and sends the data unit and the redundant code to a receive end. The receive end processes the data unit and the redundant code by using a correction function to obtain a corrected data unit, and performs parameter adjustment on the correction function based on the corrected data unit. Then, the receive end processes a subsequent data unit and redundant code by using a correction function on which parameter adjustment is performed. In this way, parameter adjustment is continuously performed on the correction function to adapt to constantly changing interference.

In this method in the related technology, because parameter adjustment needs to be performed based on an output of the correction function, a calculation delay and an extra input delay caused by parallel processing need to be considered during engineering implementation of the correction function and parameter adjustment, a parameter adjustment speed is slow. However, an interference changes rapidly, resulting in an inaccurate result obtained through processing of the correction function. Therefore, interference in a data transmission process cannot be well resolved.

## SUMMARY

Embodiments of this application provide a data transmission method and apparatus, a device, and a storage medium, to resolve a problem in a related technology. Technical solutions are as follows.

According to a first aspect, a data transmission method is provided. The method may be performed by a transmit end of a coherent optical transmission system with dual-polarization transmission and single-polarization reception. The transmit end generates a data frame, then modulates the data frame onto an optical carrier to obtain an optical signal, and sends the optical signal to a receive end. The data frame includes a plurality of subframes, at least one of the plurality of subframes includes reference pilot information, at least one data unit, and at least one redundant code corresponding to the at least one data unit, the reference pilot information is at a specified position in the subframe to which the reference pilot information belongs, reference pilot information in a 1st subframe in the data frame includes a first quantity of reference pilot symbols, reference pilot information in each subframe other than the 1st subframe in the data frame includes a second quantity of reference pilot symbols, the first quantity is greater than the second quantity, the reference pilot information is used to perform parameter adjustment on a correction function, and the correction function is used to correct, based on the redundant code, interference generated during transmission of the data unit.

In the solution shown in this embodiment of this application, the data unit is a data transmission unit, and the data unit may be one data symbol, or may be two data symbols in different polarization states in a same symbol duration. When the data unit is two data symbols in different polarization states, content of the two data symbols may be the same or may be different.

In the foregoing solution, the receive end performs parameter adjustment on the correction function based on pilot information and the reference pilot information in the received data frame. This may increase a convergence speed of parameter adjustment, so that parameter adjustment on the correction function can adapt to a rapid change of interference in a more timely manner, thereby well eliminating interference introduced in a data transmission process.

In a possible implementation, the reference pilot information includes a reference pilot symbol and a redundant code corresponding to the reference pilot symbol.

In the solution shown in this embodiment of this application, the reference pilot information may include at least one reference pilot symbol and a redundant code corresponding to each reference pilot symbol. The reference pilot symbol is a fixed symbol agreed upon by the receive end and the transmit end, and the reference pilot symbol may be prestored at the receive end and the transmit end. The redundant code of the reference pilot symbol may be pre-generated and stored, or may be generated together with the redundant code of the data unit.

In the foregoing solution, the receive end may perform parameter adjustment based on the reference pilot symbol and the corresponding redundant code in the reference pilot information, to improve accuracy of an adjusted parameter.

In a possible implementation, in the 1st subframe in the data frame, the specified position is a header of the subframe.

In the foregoing solution, when receiving each data frame, the receive end first receives reference pilot information, and may directly perform parameter adjustment, to ensure that each data unit is corrected by using a correction function on which parameter adjustment is performed. In this way, interference introduced in a data transmission process can be better eliminated.

In a possible implementation, for a plurality of subframes other than the 1st subframe in the data frame, each of the plurality of subframes corresponds to one specified position, all specified positions corresponding to the plurality of subframes are classified into N specified positions, and the N specified positions appear in turn in the data frame.

In the foregoing solution, when N correction functions need to work in parallel (different correction functions are used to correct data units at different positions in a subframe), reference pilot information at each specified position may be used to perform parameter adjustment on one correction function. In this way, parameter adjustment may be performed on the N correction functions in turn. In this way, it can be ensured that each correction function can have a fast convergence speed, and can adapt to a rapid change of interference in a more timely manner, thereby well eliminating interference introduced in a data transmission process.

In a possible implementation, for a plurality of subframes other than the 1st subframe in the data frame, a specified position of each of the plurality of subframes is a header of the subframe. In the foregoing solution, a subframe structure is simplified, and a processing amount of the data frame generated by the transmit end is reduced.

In a possible implementation, the 1st subframe in the data frame includes only the reference pilot information. In the foregoing solution, parameter adjustment is performed on the correction function by using the 1st subframe, so that more reference pilot information can enable the correction function to converge more quickly, and adapt to a rapid change of interference in a more timely manner, thereby well eliminating interference introduced in a data transmission process.

In a possible implementation, the redundant code is an Alamouti code. In the foregoing solution, dual-polarization transmission and single-polarization reception can be better implemented.

According to a second aspect, a data transmission method is provided. The method is performed by a receive end of a coherent optical transmission system with dual-polarization transmission and single-polarization reception. The receive end receives an optical signal, performs parameter adjustment on a correction function based on pilot information and preset reference pilot information in a data frame, and then determines a corrected data unit based on a data unit, a redundant code, and a correction function on which parameter adjustment is performed. The correction function is used to correct, based on the redundant code, interference generated during transmission of the data unit. The data frame includes a plurality of subframes, at least one of the plurality of subframes includes the pilot information, at least one data unit, and at least one redundant code corresponding to the at least one data unit, the pilot information is at a specified position in the subframe to which the pilot information belongs, pilot information in a 1st subframe in the data frame includes a first quantity of pilot symbols, pilot information in each subframe other than the 1st subframe in the data frame includes a second quantity of pilot symbols, and the first quantity is greater than the second quantity.

In the solution shown in this embodiment of this application, after receiving an optical signal in a polarization state (where an X polarization state is used as an example), the receive end converts the optical signal into an analog signal, and then converts the analog signal into a digital signal. Then, the receive end performs digital signal processing on the digital signal to obtain a digital signal corresponding to the X polarization state. The receive end conjugates the digital signal corresponding to the X polarization state to obtain two digital signals, and then replicates each digital signal to obtain four digital signals in total.

In the foregoing solution, the receive end performs parameter adjustment on the correction function based on the pilot information and the reference pilot information in the received data frame. This may increase a convergence speed of parameter adjustment, so that parameter adjustment on the correction function can adapt to a rapid change of interference in a more timely manner, thereby well eliminating interference introduced in a data transmission process.

In a possible implementation, the pilot information includes a pilot symbol and a redundant code corresponding to the pilot symbol, and the reference pilot information includes a reference pilot symbol. In the foregoing solution, the receive end may perform parameter adjustment based on the received pilot symbol, corresponding redundant code, and reference pilot symbol, to improve accuracy of an adjusted parameter.

In a possible implementation, the receive end determines a corrected pilot symbol based on the pilot symbol, the redundant code corresponding to the pilot symbol, and the correction function, and then performs parameter adjustment on the correction function based on the corrected pilot symbol and the reference pilot symbol. In the foregoing solution, parameter adjustment is performed on the correction function by using the corrected pilot symbol and the reference pilot symbol, to improve accuracy of an adjusted parameter.

In a possible implementation, the correction function includes a phase correction subfunction and a crosstalk correction subfunction. The receive end inputs the pilot symbol and the redundant code corresponding to the pilot symbol into the crosstalk correction subfunction to obtain intermediate output data. The receive end determines the corrected pilot symbol based on the intermediate output data and the phase correction subfunction. The receive end performs parameter adjustment on the crosstalk correction subfunction based on the corrected pilot symbol and the reference pilot symbol.

In the solution shown in this embodiment of this application, parameter adjustment processing performed on the correction function may also include two parts: crosstalk parameter adjustment and phase parameter adjustment. Before parameter adjustment is performed, framing may be first performed (to be specific, a start position of a data frame is detected). Framing may be performed based on pilot information in a 1st subframe, or may be performed in another manner. After framing is completed, the receive end reads a pilot symbol and a corresponding redundant code from the 1st subframe, and processes the pilot symbol and the corresponding redundant code based on the correction function having an initial crosstalk parameter to obtain a corrected pilot symbol. After the corrected pilot symbol is obtained, the crosstalk parameter may be updated by using a feedback algorithm such as a least mean square (least mean square, LMS) algorithm.

In the foregoing solution, parameter adjustment is performed on the crosstalk correction subfunction by using the corrected pilot symbol and the reference pilot symbol, to improve accuracy of an adjusted crosstalk parameter.

In a possible implementation, after the pilot symbol and the redundant code corresponding to the pilot symbol are input into the crosstalk correction subfunction to obtain the intermediate output data, parameter adjustment is performed on the phase correction subfunction based on the intermediate output data and the reference pilot symbol.

In the solution shown in this embodiment of this application, a phase parameter is adjusted by using a phase recovery (carrier recovery, CR) algorithm.

In the foregoing solution, parameter adjustment is performed on the phase correction subfunction by using the intermediate output data and the reference pilot symbol, and the intermediate output data is obtained through crosstalk correction. This helps increase a convergence speed of the phase correction subfunction, and improve accuracy of an adjusted phase parameter.

In a possible implementation, in the 1st subframe in the data frame, the specified position is a header of the subframe. In the foregoing solution, when receiving each data frame, the receive end first receives pilot information, and may directly perform parameter adjustment, to ensure that each data unit is corrected by using a correction function on which parameter adjustment is performed. In this way, interference introduced in a data transmission process can be better eliminated.

In a possible implementation, for a plurality of subframes other than the 1st subframe in the data frame, each of the plurality of subframes corresponds to one specified position, all specified positions corresponding to the plurality of subframes are classified into N specified positions, and the N specified positions appear in turn in the data frame.

In the foregoing solution, when N correction functions need to work in parallel (different correction functions are used to correct data units at different positions in a subframe), pilot information at each specified position may be used to perform parameter adjustment on one correction function. In this way, parameter adjustment may be performed on the N correction functions in turn. In this way, it can be ensured that each correction function can have a fast convergence speed, and can adapt to a rapid change of interference in a more timely manner, thereby well eliminating interference introduced in a data transmission process.

In a possible implementation, for a plurality of subframes other than the 1st subframe in the data frame, a specified position of each of the plurality of subframes is a header of the subframe. In the foregoing solution, a subframe structure is simplified, and a processing amount of the data frame generated by the transmit end is reduced.

In a possible implementation, the 1st subframe in the data frame includes only the pilot information. In the foregoing solution, parameter adjustment is performed on the correction function by using the 1st subframe, so that more pilot information can enable the correction function to converge more quickly, and adapt to a rapid change of interference in a more timely manner, thereby well eliminating interference introduced in a data transmission process.

In a possible implementation, the redundant code is an Alamouti code. In the foregoing solution, dual-polarization transmission and single-polarization reception can be better implemented.

According to a third aspect, a data transmission apparatus is provided. The apparatus includes at least one module, and the at least one module is configured to implement the data transmission method provided in the first aspect, the second aspect, and the possible implementations of the first aspect and the second aspect.

According to a fourth aspect, an optical network device is provided. The optical network device includes a memory and a processor, the memory is configured to store computer instructions; and the processor executes the computer instructions stored in the memory, to enable the optical network device to perform the data transmission method provided in the first aspect, the second aspect, and the possible implementations of the first aspect and the second aspect.

According to a fifth aspect, a computer-readable storage medium is provided. The computer-readable storage medium stores computer program code, and in response to the computer program code being executed by an optical network device, the optical network device performs the data transmission method provided in the first aspect, the second aspect, and the possible implementations of the first aspect and the second aspect.

According to a sixth aspect, a computer program product is provided. The computer program product includes computer program code, and in response to the computer program code being executed by an optical network device, the optical network device performs the data transmission method provided in the first aspect, the second aspect, and the possible implementations of the first aspect and the second aspect.

**BRIEF DESCRIPTION OF DRAWINGS**

FIG. 1 is a diagram of a structure of a coherent optical communication system;
FIG. 2 is a method flowchart of a data transmission method according to an embodiment of this application;
FIG. 3 is a diagram of a structure of a subframe according to an embodiment of this application;
FIG. 4 is a diagram of a structure of a 1st subframe in a data frame according to an embodiment of this application;
FIG. 5 is a diagram of a structure of a 1st subframe and a 2nd subframe in a data frame according to an embodiment of this application;
FIG. 6 is a diagram of a structure of a 2nd subframe and a 1st subframe that includes only reference pilot information in a data frame according to an embodiment of this application;
FIG. 7 is a diagram of a structure of a 2nd subframe to a 5th subframe that have a same subframe structure in a data frame according to an embodiment of this application;
FIG. 8 is a diagram of a structure of a 2nd subframe to a 5th subframe that have different subframe structures in a data frame according to an embodiment of this application;
FIG. 9 is a diagram of digital signal processing according to an embodiment of this application;
FIG. 10 is a diagram of a principle of performing MIMO equalization on a 1st subframe according to an embodiment of this application;
FIG. 11 is a diagram of digital signal processing in which phase correction is performed twice according to an embodiment of this application;
FIG. 12 is a diagram of a principle of performing MIMO equalization on a first-type subframe according to an embodiment of this application;
FIG. 13 is a diagram of a principle of performing MIMO equalization on a second-type subframe according to an embodiment of this application;
FIG. 14 is a diagram of digital signal processing in which a fractional delay is added according to an embodiment of this application;
FIG. 15 is a diagram of a principle of performing MIMO equalization on a subframe to which a fractional delay is added according to an embodiment of this application;
FIG. 16 is a diagram of a structure of a data transmission apparatus applied in a transmit end according to an embodiment of this application; and
FIG. 17 is a diagram of a structure of a data transmission apparatus applied in a receive end according to an embodiment of this application.

**DESCRIPTION OF EMBODIMENTS**

The following explains some terms in embodiments of this application.

A symbol indicates a basic unit that carries data, and each symbol includes data of a plurality of bits.

A baud rate indicates a quantity of symbols transmitted per second. For example, if the baud rate is 1, it indicates that one symbol is transmitted per second.

A symbol duration indicates time used for transmitting one symbol, and is a reciprocal of the baud rate. For example, if the baud rate is 2, to be specific, two symbols are transmitted per second, the time used for transmitting one symbol is 0.5 second.

Sampling rate: Sampling in embodiments of this application may be considered as division of a plurality of pieces of continuously received data. For example, for data of eight symbols and 16 sampling points, sampling data of each sampling point is data of 0.5 symbol. The sampling rate may be represented as a multiple, and indicates how many times a quantity of pieces of sampling data exceeds a quantity of symbols in a subframe. For example, if one subframe includes eight symbols, and the sampling rate is 1.25 times, the subframe has 10 ($8 \times 1.25$) sampling points in total, and data of each sampling point is 0.8 symbols.

A transmission matrix is a matrix used to represent a transformation relationship between a signal transmitted by a transmit end and a signal received by a receive end.

A correction function is a function used by the receive end to process a received data unit and redundant code to obtain a corrected data unit. The correction function may include a crosstalk correction subfunction and a phase correction subfunction, which are respectively used for crosstalk correction and phase interference correction.

An input sampling point, also referred to as input sampling data, is sampling data input into the correction function.

An output sampling point, also referred to as output sampling data, is sampling data obtained by sampling output data of the correction function, and is used for subsequent parameter adjustment on the correction function.

A quantity of taps is a quantity of input sampling points that need to be processed each time one output sampling point is obtained.

An equalizer may be considered as the crosstalk correction subfunction in the correction function. Each equalizer may include a plurality of filters, and the filter is configured to correct crosstalk introduced in a signal transmission process.

In embodiments of this application, a multiplication sign is omitted during representation of multiplication between letters or multiplication between a letter and a digit. For example, $2*N*M$ is represented as 2NM, and $2*T_1$ is represented as $2T_1$.

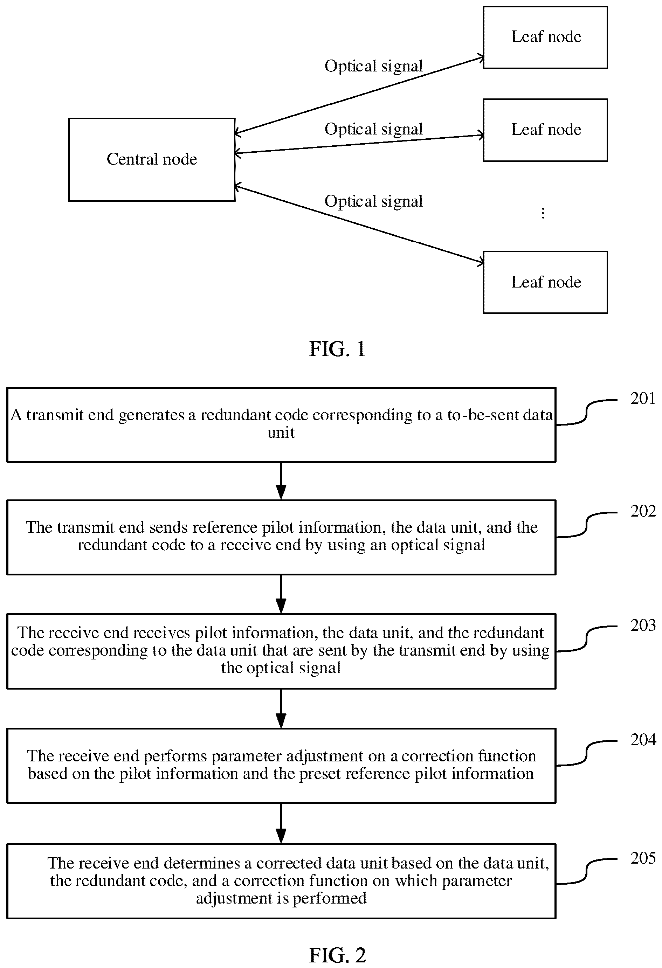

A point-to-multipoint (point-to-multipoint, P2MP) system architecture may be used in a coherent optical communication system. As shown in FIG. 1, the P2MP architecture includes a central node and a plurality of leaf nodes, and each central node is connected to a plurality of leaf nodes. When the central node transmits data to the leaf node, a polarization-independent reception technology may be used to reduce costs of the leaf node. In this technology, an optical signal transmission manner of dual-polarization transmission and single-polarization reception is used.

The central node uses a dual-polarization transceiver, and the dual-polarization transceiver includes four digital-to-analog converters (digital-to-analog converters, DACs), one dual-polarization in-phase/quadrature (in-phase/quadrature phase, IQ) modulator (including four Mach-Zehnder modulators), one standard optical receiver with four balanced photodetectors (balanced photodetectors, BPDs), and four analog-to-digital converters (analog-to-digital converters, ADCs). The leaf node uses a single-polarization transceiver, and the single-polarization transceiver includes one optical receiver with a single BPD, one DAC, and one ADC.

An embodiment of this application provides a data transmission method. The method may be performed by a coherent optical communication system, and the coherent optical communication system includes a transmit end and a receive end. In this embodiment of this application, an application in a downlink transmission process of a P2MP coherent optical communication system is used as an example for description. To be specific, the transmit end is a central node, and the receive end is a leaf node. A processing procedure of the method may be shown in FIG. 2, and includes the following processing steps.

201: The transmit end generates a redundant code corresponding to a to-be-sent data unit.

The data unit is a data transmission unit, and the data unit may be one data symbol, or may be two data symbols in different polarization states in a same symbol duration. When the data unit is two data symbols in different polarization states, content of the two data symbols may be the same or may be different.

The redundant code in this embodiment of this application may be generated through Alamouti encoding, and the redundant code generated through Alamouti encoding may implement dual-polarization transmission and single-polarization reception. If the data unit is one data symbol, Alamouti encoding is performed on two data units in different polarization states in a same symbol duration to obtain a corresponding redundant code. If the data unit is two data symbols in different polarization states in the same symbol duration, Alamouti encoding is directly performed on the data unit to obtain a redundant code corresponding to the data unit. A character length of the data unit is the same as that of the redundant code, and each data unit may be adjacent to a corresponding redundant code.

For example, the data unit is $\begin{bmatrix} x_1 \\ y_1 \end{bmatrix}$ , and after Alamouti encoding, the data unit and the corresponding

redundant code are $\begin{bmatrix} x_1 & -y_1^* \\ y_1 & x_1^* \end{bmatrix}$ . $x_1$ and $y_1$ are data symbols in two polarization states, $x_1^*$ is conjugate of $x_1$, and $y_1^*$ is

conjugate of $y_1$. $x_1$ and $-y_1^*$ are modulated to a same polarization state of an optical carrier (that is, sent by using optical signals in the same polarization state), $y_1$ and $x_1^*$ are also modulated to another polarization state of the optical carrier, and the two polarization states are orthogonal to each other.

202: The transmit end sends reference pilot information, the data unit, and the redundant code to the receive end by using an optical signal.

The reference pilot information may include at least one reference pilot symbol and a redundant code corresponding to each reference pilot symbol (where the redundant code is generated by performing encoding processing on each reference pilot symbol). The reference pilot symbol is a fixed symbol agreed upon by the receive end and the transmit end. The reference pilot symbol may be pre-stored at the receive end and the transmit end. The redundant code of the reference pilot symbol may also be pre-generated and stored, or may be generated when step 201 is performed.

The transmit end sends signals in a unit of 2NM symbol durations, and the signals sent in the 2NM symbol durations may be referred to as one data frame. Because a signal transmitted by the transmit end in each symbol duration has two polarization states, two single-polarization symbols whose polarization states are perpendicular to each other are sent in each symbol duration, and the data frame includes 4NM single-polarization symbols. Both N and M are integers. It indicates that each data frame is divided into M subframes, each subframe includes 4N single-polarization symbols, and each polarization state of the subframe includes 2N single-polarization symbols. Specific values of N and M may be set randomly based on a requirement.

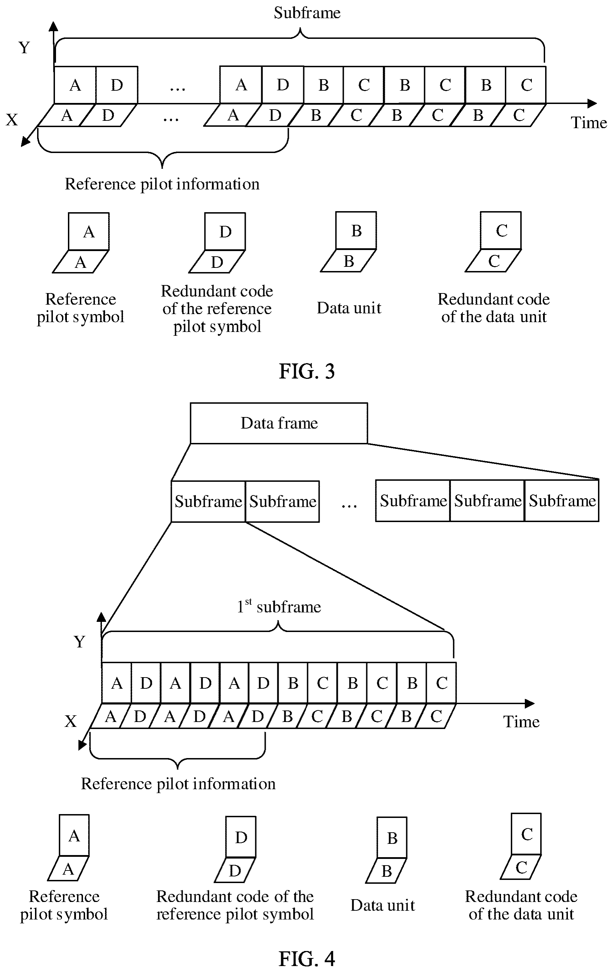

Each subframe may include at least one data unit, a redundant code corresponding to the data unit, and reference pilot information. As shown in FIG. 3, in a subframe, each data unit may be adjacent to a corresponding redundant code. The reference pilot information may be at a specified position in the subframe. The following describes specified positions in different subframes.

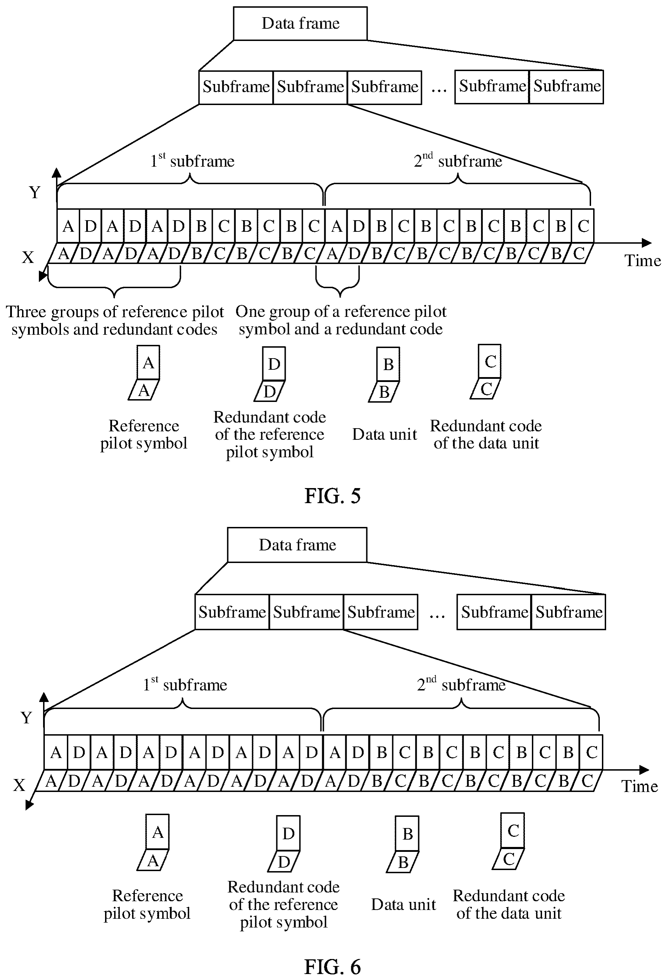

As shown in FIG. 4, if a subframe is a 1st subframe in a data frame to which the subframe belongs, a specified position may be a header of the subframe. When the transmit end transmits the 1st subframe in the data frame, first $2T_1$ symbol durations (where $T_1 \leq N$) may be used to send reference pilot information, and remaining $2(N-T_1)$ symbol durations may be used to send data units and corresponding redundant codes. The 1st subframe in the data frame may include $T_1$ (a first quantity of) reference pilot symbols, $T_1$ corresponding redundant codes, $(N-T_1)$ data units, and $(N-T_1)$ corresponding redundant codes. For example, when $T_1$ is set to 3 and N is set to 6, a subframe structure is shown by a 1st subframe shown in FIG. 5. The subframe includes three groups of reference pilot symbols and corresponding redundant codes, and each group of a reference pilot symbol and a corresponding redundant code corresponds to one reference pilot symbol and a redundant code of the reference pilot symbol.

The 1st subframe in the data frame may alternatively include only the reference pilot information, that is, $T_1$ is set to be equal to N. 2N symbol durations are all used to send the reference pilot information. As shown in FIG. 6, the 1st subframe in the data frame transmitted by the transmit end includes N reference pilot symbols and N corresponding redundant codes.

If a subframe is a subframe other than a 1st subframe in a data frame to which the subframe belongs, there may be a plurality of cases for a specified position. The transmit end may change, based on different cases of the specified position, a sequence of sending reference pilot information.

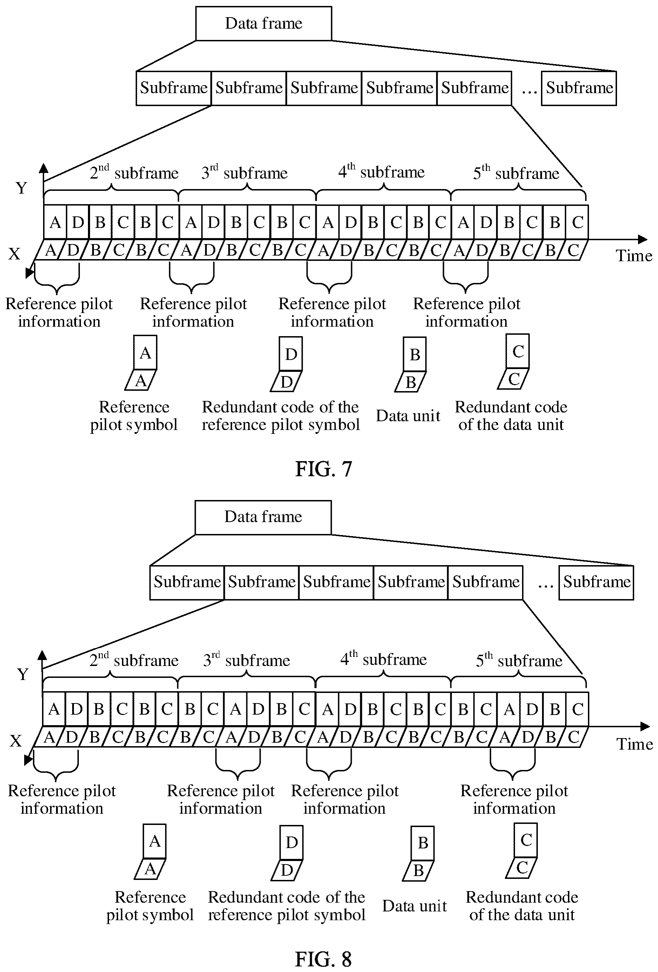

Case 1: A specified position of each subframe is a header of the subframe. When the transmit end transmits the subframe other than the 1st subframe in the data frame, first $2T_2$ symbol durations (where $T_2 < Ti \leq N$) are used to send reference pilot information, and $2(N-T_2)$ symbol durations are used to send data units and corresponding redundant codes. As shown in FIG. 7, the subframe other than the 1st subframe in the data frame may include a second quantity $T_2$ of reference pilot symbols, $T_2$ corresponding redundant codes, $(N-T_2)$ data units, and $(N-T_2)$ corresponding redundant codes.

Case 2: Each subframe corresponds to one specified position, all specified positions corresponding to a plurality of subframes are classified into N specified positions, and the N specified positions appear in turn in the data frame. For example, there are two types of specified positions, and structures of two corresponding types of subframes are shown in FIG. 8. Positions of a 1st symbol and a 2nd symbol of a first-type subframe (a 3rd subframe and a 5th subframe in the figure) are specified positions, and positions of a 3rd symbol and a 4th symbol of a second-type subframe (a 2nd subframe and a 4th subframe in the figure) are specified positions. The two types of subframes appear in turn.

Interference introduced in a data transmission process includes a phase error and crosstalk. The phase error includes laser phase noise and a frequency offset. The crosstalk includes polarization rotation and inter-symbol interference (inter-symbol interference, ISI). To correct the ISI in the crosstalk, a plurality of consecutive pilot symbols need to be used for calculation. However, the ISI changes slowly, and only needs to be adjusted once per data frame. Therefore, the first quantity of pilot symbols are inserted into a 1st subframe in each data frame. However, a phase coefficient and the polarization rotation in the crosstalk change quickly, and need to be adjusted at a high frequency. For example, adjustment is performed once per subframe, or adjustment is performed once per N subframes, where N is a quantity of specified positions in Case 2, that is, a quantity of subframe types. However, adjustment of the phase coefficient and the polarization rotation in the crosstalk does not need to use several pieces of continuous pilot information. Therefore, it is set that the second quantity of reference pilot symbols are inserted into a subframe other than the 1st subframe in each data frame. The first quantity is greater than the second quantity, and during actual application, the second quantity may be set to 1.

203: The receive end receives pilot information, the data unit, and the redundant code corresponding to the data unit that are sent by the transmit end by using the optical signal.

The pilot information includes a pilot symbol and a redundant code corresponding to the pilot symbol.

After receiving an optical signal in a polarization state (where an X polarization state is used as an example), the receive end converts the optical signal into an analog signal by using a photodetector and a transimpedance amplifier (transimpedance amplifier, TIA), and then converts the analog signal into a digital signal by using an ADC. Then, the receive end performs digital signal processing such as clock recovery and dispersion compensation on the digital signal to obtain a digital signal corresponding to the X polarization state.

204: The receive end performs parameter adjustment on a correction function based on the pilot information and the preset reference pilot information.

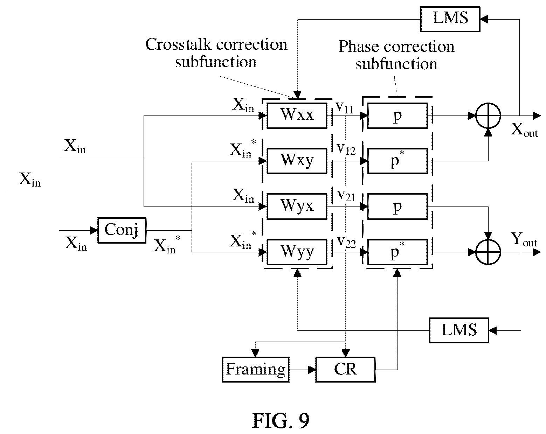

The correction function may include a crosstalk correction subfunction and a phase correction subfunction, as shown in FIG. 9. The receive end conjugates the digital signal corresponding to the X polarization state to obtain two digital signals, and then replicates each digital signal to obtain four digital signals in total.

It is assumed that a transmission matrix of the data unit and the corresponding redundant code $\begin{bmatrix} x_1 & -y_1^* \\ y_1 & x_1^* \end{bmatrix}$

at the transmit end is $\begin{bmatrix} h_{xx} & h_{xy} \\ h_{yx} & h_{yy} \end{bmatrix}$ , and an introduced phase error is $e^{j\theta}$. In this case, the corresponding data unit and redundant code $[R_1\ R_2]$ at the receive end are shown in Formula (1) and Formula (2):

$$R_1 = h_{xx} x_1 p_1^* + h_{xy} y_1 p_1^* \qquad (1)$$

$$R_2 = -h_{xx} y_1^* p_2^* + h_{xy} x_1^* p_2^* \qquad (2)$$

$p_1 = e^{-j\theta_1}$, $p_2 = e^{-j\theta_2}$, $p_1^* = e^{j\theta_1}$ , and $p_2^* = e^{-j\theta_2}$ . $p_1$, $p_1^*$ , $p_2$, and $p_2^*$ represent phase parameters, and the phase parameter is a parameter used to represent phase interference. $h_{xx}$, $h_{xy}$, $h_{xx}^*$ , and $h_{xy}^*$ represent crosstalk caused to data in the transmission process, and may be referred to as crosstalk parameters.

Although the phase error changes rapidly, a phase error between two consecutive symbols $R_1$ and $R_2$ changes slightly, and it may be approximately considered that $p_1 = p_2 = p$. Conjugate of $R_2$ is obtained through simple mathematical deduction, as shown in Formula (3):

$$\begin{bmatrix} x_1 \\ y_1 \end{bmatrix} = \begin{bmatrix} h_{xx} p^* & h_{xy} p^* \\ h_{xy}^* p & -h_{xx}^* p \end{bmatrix}^{-1} \begin{bmatrix} R_1 \\ R_2^* \end{bmatrix} = \begin{bmatrix} h_{xx}^* p & h_{xy} p^* \\ h_{xy}^* p & -h_{xx} p^* \end{bmatrix} \begin{bmatrix} R_1 \\ R_2^* \end{bmatrix} \qquad (3)$$

Because the crosstalk parameter and the phase parameter are unknown, the crosstalk parameters $h_{xx}$, $h_{xy}$, $h_{xx}^*$ , and $h_{xy}^*$ and phase parameters $p$ and $p^*$ need to be dynamically converged by using an algorithm, such as an LMS algorithm. Alamouti decoding is performed through multiple-input multiple-output (multiple-input multiple-output, MIMO) equalization, to compensate for a polarization rotation effect. In this way, information about two polarization states at the transmit end can be recovered based on received data units and redundant codes in two consecutive slots, thereby implementing polarization-independent reception.

In this embodiment of this application, multi-tap crosstalk parameters $\vec{W}_{xx}$, $\vec{W}_{xy}$, $\vec{W}_{yx}$, and $\vec{W}_{yy}$ are used to replace the single-tap crosstalk parameters $h_{xx}$, $h_{xy}$, $h_{xx}^*$ , and $h_{xy}^*$ , and the correction function may be expressed as Formula (4) and Formula (5):

$$X_{out} = \vec{W}_{xx}^T \vec{X}_{in} p + \vec{W}_{xy}^T \vec{X}_{in}^* p^* \qquad (4)$$

$$Y_{out} = \vec{W}_{yx}^T \vec{X}_{in} p + \vec{W}_{yy}^T \vec{X}_{in}^* p^* \qquad (5)$$

Vectors $\vec{X}_{in}$ and $\vec{X}_{in}^*$ represent inputs of the correction function, $X_{out}$ and $Y_{out}$ are outputs of the correction function, vectors $\vec{W}_{xx}$, $\vec{W}_{xy}$, $\vec{W}_{yx}$, and $\vec{W}_{yy}$ are crosstalk parameters, and $p$ and $p^*$ are phase parameters. Parameter adjustment processing performed on the correction function may also include two parts: crosstalk parameter adjustment and phase parameter adjustment.

In a first part, a corrected pilot symbol is determined based on the pilot symbol, the redundant code corresponding to the pilot symbol, and the correction function, and crosstalk parameter adjustment is performed on the correction function based on the corrected pilot symbol and the reference pilot symbol. The first part may include the following three steps.

Step 1: The receive end may input the pilot symbol and the redundant code corresponding to the pilot symbol into the crosstalk correction subfunction to obtain intermediate output data.

Crosstalk parameter adjustment may be specifically MIMO equalization performed in an equalizer. Refer to FIG. 9. Four digital signals are respectively input into equalizers Wxx, Wxy, Wyx, and Wyy (that is, the crosstalk correction subfunction), and the equalizer performs MIMO equalization processing, which is specifically performing calculation of

$$\overrightarrow{W}_{xx}^{T}\overrightarrow{X}_{in}, \quad \overrightarrow{W}_{xy}^{T}\overrightarrow{X}_{in}^{*}, \quad \overrightarrow{W}_{yx}^{T}\overrightarrow{X}_{in}, \quad \text{and} \quad \overrightarrow{W}_{yy}^{T}\overrightarrow{X}_{in}^{*}$$

in the correction function. Before performing MIMO equalization processing, the receive end may first perform framing (to be specific, detect a start position of a data frame). Framing may be performed based on pilot information in a 1st subframe, or may be performed in another manner. The following describes in detail a method for performing framing based on the pilot symbol in the 1st subframe.

It is assumed that outputs of Wxx, Wxy, Wyx, and Wyy are respectively $v_{11}$, $v_{12}$, $v_{21}$, and $v_{22}$ (intermediate output data). A symbol sequence that has a same length as a symbol length of one data frame in $v_{11}$ is selected, and shift correlation is separately performed on the sequence, a reference pilot symbol sequence of the 1st subframe, and a conjugate sequence of the reference pilot symbol sequence. Then, amplitudes of correlation values are added, and a position of a head of the 1st subframe may be determined based on a shift value corresponding to a maximum amplitude.

After framing is completed, the receive end reads a pilot symbol and a corresponding redundant code from the 1st subframe, and processes the pilot symbol and the corresponding redundant code based on the correction function having an initial crosstalk parameter to obtain a corrected pilot symbol. After the corrected pilot symbol is obtained, the crosstalk parameter may be updated by using a feedback algorithm. A least mean square (least mean square, LMS) algorithm is used as an example for description.

The receive end may pre-assign the initial crosstalk parameter to the equalizer. Three taps are used as an example for description. [0, 1, 0], [0, 0, 0], [0, 0, 0], and [0, 1, 0] may be sequentially assigned to $\overrightarrow{W}_{xx}$, $\overrightarrow{W}_{xy}$, $\overrightarrow{W}_{yx}$, and $\overrightarrow{W}_{yy}$.

In this embodiment of this application, an example in which an input of the correction function for MIMO equalization is 1.25 times sampling and an output is 0.5 times sampling is used for description. In other words, two output sampling points should be output each time five input sampling points are input. Herein, only one equalizer Wxx for MIMO equalization is described, and other equalizers Wxy, Wyx, and Wyy are similar.

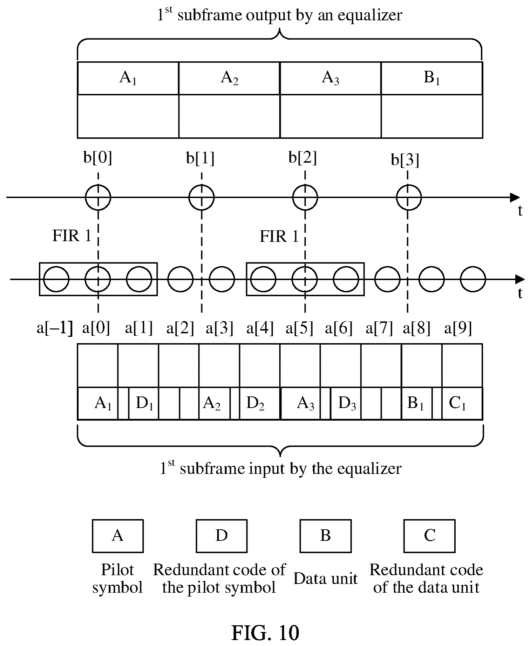

It is assumed that an input of the Wxx equalizer is a sequence a[n], and an output is a sequence b[n]. As shown in FIG. 10, five input sampling points a[0] to a[4] and two output sampling points b[0] and b[1] occupy a same time period. Assuming that a[0] and b[0] are strictly aligned in terms of moments, a[5m] and b[2m] (where m is any integer) are strictly aligned in terms of moments. Formulas for calculating b[n] based on a[n] may be obtained, as shown in Formula (6) and Formula (7):

$$b[2m] = h_{2m}[-1]a[5m-1] + h_{2m}[0]a[5m] + h_{2m}[1]a[5m+1] \tag{6}$$

$$b[2m+1] = h_{2m+1}[-1]a[5m+1] + h_{2m+1}[0]a[5m+2] + h_{2m+1}[1]a[5m+3] \tag{7}$$

Calculation of b[n] based on a[n] may be considered as calculation of $\overrightarrow{W}_{xx}^{T}\overrightarrow{X}_{in}$ in the correction function, and a reason for calculating $b[2m]$ and $b[2m+1]$ by using two formulas is described in detail in the following content.

For $h_n[k]$ in the formula, $k$ is a coefficient number, and it may be set that $k$=-1, 0, or 1. In a case of three taps, one output sampling point can be calculated for three input sampling points. $h_n[1]$ represents a coefficient corresponding to a 1st input sampling point in the three input sampling points, $h_n[0]$ represents a coefficient corresponding to a 2nd input sampling point in the three input sampling points, and $h_n[-1]$ represents a coefficient corresponding to a 3rd input sampling point in the three input sampling points. n is a time sequence number.

Step 2: Determine, based on the intermediate output data and the phase correction subfunction, the corrected pilot symbol (that is, a pilot symbol on which crosstalk correction and phase correction are performed).

As shown in FIG. 9, the receive end may input $v_{11}$, $v_{12}$, $v_{21}$, and $v_{22}$ into the phase correction subfunction, that is, input the output sequence b[n] for MIMO equalization into the phase correction subfunction, to obtain the outputs $X_{out}$ and $Y_{out}$ of the correction function, that is, corrected pilot symbols.

Step 3: Perform crosstalk parameter adjustment on the crosstalk correction subfunction based on the corrected pilot symbol and the reference pilot symbol.

As shown in FIG. 9, the corrected pilot symbol and the reference pilot symbol are input into the LMS algorithm, to obtain an adjusted crosstalk parameter, that is, obtain a crosstalk correction subfunction on which parameter adjustment is performed. Specific processing of the LMS algorithm may be as follows.

When reference pilot symbols corresponding to $X_{out}$ and $Y_{out}$ in Formula (4) and Formula (5) are $X_p$ and $Y_p$, the crosstalk parameters may be adjusted by using the following Formula (8) to Formula (11):

$$\vec{W}_{xx} = \vec{W}'_{xx} + \mu\vec{x^*_{in}}e_{xx} \tag{8}$$

$$\vec{W}_{xy} = \vec{W}'_{xy} + \mu\vec{x_{in}}e_{xy} \tag{9}$$

$$\vec{W}_{yx} = \vec{W}'_{yx} + \mu\vec{x^*_{in}}e_{yx} \tag{10}$$

$$\vec{W}_{yy} = \vec{W}'_{yy} + \mu\vec{x_{in}}e_{yy} \tag{11}$$

The vectors $\vec{W}_{xx}$, $\vec{W}_{xy}$, $\vec{W}_{yx}$, and $\vec{W}_{yy}$ are adjusted crosstalk parameters, vectors $\vec{W}'_{xx}$, $\vec{W}'_{xy}$, $\vec{W}'_{yx}$ and $\vec{W}'_{yy}$ are crosstalk parameters that are not adjusted, $\mu$ is an adjustment step, $e_{xx}$, $e_{xy}$, $e_{yx}$, and $e_{yy}$ are errors between the reference pilot symbols and the corrected pilot symbols, and $e_{xx}$, $e_{xy}$, $e_{yx}$, and $e_{yy}$ are calculated by using the following Formulas (12) to (15):

$$e_{xx} = (X_p - X_{out})p^* \tag{12}$$

$$e_{xy} = (X_p - X_{out})p \tag{13}$$

$$e_{yx} = (Y_p - Y_{out})p^* \tag{14}$$

$$e_{yy} = (Y_p - Y_{out})p \tag{15}$$

p and p* are phase parameters in the phase correction subfunction, and an initial value of the phase parameter may be a preset value. Each time parameter adjustment is performed on the phase correction subfunction subsequently, the value of the phase parameter is adjusted. In a start phase of signal processing at the receive end, only the pilot information may be used to calculate the error and update the crosstalk parameter.

In a second part, phase parameter adjustment is performed on the correction function based on the pilot information and the preset reference pilot information. The second part may include the following two steps.

Step 1: The receive end may input the pilot symbol and the redundant code corresponding to the pilot symbol into the crosstalk correction subfunction to obtain intermediate output data. For specific processing, refer to step 1 in the first part.

Step 2: Perform phase parameter adjustment on the phase correction subfunction based on the intermediate output data and the reference pilot symbol.

In this embodiment of this application, the phase parameter is adjusted based on the intermediate output data and the preset reference pilot symbol by using a phase recovery (carrier recovery, CR) algorithm, as shown in FIG. 9. Specific processing of the CR algorithm may be as follows.

A $k^{th}$ subframe is used as an example. It is known that reference pilot symbols at the transmit end are $X_p(k)$ and $Y_p(k)$, and it is assumed that the phase parameter corresponding to the phase error introduced by the phase noise and the frequency shift is $p(k) = e^{j\theta(k)}$. In this case, Formula (16) and Formula (17) are as follows:

$$X_p(k) = v_{11p}(k)p(k) + v_{12p}(k)p^*(k) \tag{16}$$

$$Y_p(k) = v_{21p}(k)\,p(k) + v_{22p}(k)\,p^*(k) \qquad (17)$$

$v_{11p}$, $v_{12p}$, $v_{21p}$, and $v_{22p}$ are respectively outputs of the crosstalk correction subfunction: Wxx, Wxy, Wyx, and Wyy, that is, the sequence b[n] in FIG. 10, and a corner mark p represents a pilot symbol.

In this embodiment of this application, it may be properly assumed that the ISI in the crosstalk parameter may be separated from a polarization parameter. It may be considered that after the crosstalk parameter is converged, ISI in a pilot symbol on which crosstalk correction is performed is fully compensated (that is, there is no ISI coefficient). In this case, the pilot symbol on which crosstalk correction is performed is shown in Formula (18) to Formula (21):

$$v_{11p}(k) = w_{11p}(k)\,u_{1p}(k) \qquad (18)$$

$$v_{12p}(k) = w_{12p}(k)\,u_{2p}^*(k) \qquad (19)$$

$$v_{21p}(k) = w_{21p}(k)\,u_{1p}(k) \qquad (20)$$

$$v_{22p}(k) = w_{22p}(k)\,u_{2p}^*(k) \qquad (21)$$

$w_{11p}$, $w_{12p}$, $w_{21p}$, and $w_{22p}$ are polarization parameters. In addition, $w_{11p} = w_{22p}^*$, and $w_{12p} = -w_{21p}^*$. $u_{1p}$ and $u_{2p}$ are pilot symbols in a subframe before Alamouti decoding.

Therefore, Formula (22) to Formula (25) are obtained by combining Formula (16) to Formula (21):

$$X_p(k)v_{11p}^* = |w_{11p}(k)|^2|u_{1p}(k)|^2 p(k) + w_{12p}(k)w_{11p}^*(k)u_{1p}^*(k)u_{2p}^*(k)p^*(k) \qquad (22)$$

$$Y_p^*(k)v_{22p} = |w_{11p}(k)|^2|u_{2p}(k)|^2 p(k) - w_{12p}(k)w_{11p}^*(k)u_{1p}^*(k)u_{2p}^*(k)p^*(k) \qquad (23)$$

$$X_p(k)v_{12p}^* = |w_{12p}(k)|^2|u_{2p}(k)|^2 p^*(k) + w_{11p}(k)w_{12p}^*(k)u_{1p}(k)u_{2p}(k)p(k) \qquad (24)$$

$$Y_p^*(k)v_{21p} = |w_{12p}(k)|^2|u_{1p}(k)|^2 p^*(k) - w_{11p}(k)w_{12p}^*(k)u_{1p}(k)u_{2p}(k)p(k) \qquad (25)$$

Formulas (26) and (27) are obtained by arranging Formula (22) to Formula (25), and an adjusted phase parameter $p'(k)$ is obtained:

$$Z(k) = X_p(k)v_{11p}^*(k) + Y_p^*(k)v_{22p}(k) + X_p^*(k)v_{12p}(k) + Y_p(k)v_{21p}^*(k)$$
$$= \left(|w_{11p}(k)|^2 + |w_{12p}(k)|^2\right)\left(|u_{1p}(k)|^2|u_{2p}(k)|^2\right)p(k) \qquad (26)$$

$$p'(k) = e^{j*angle\left(\sum_k (Z(k))\right)} \qquad (27)$$

The parameters in the first part and the second part are adjusted together, and corresponding processing may be as follows: The receive end may determine the intermediate output data based on the pilot symbol, the redundant code corresponding to the pilot symbol, and the crosstalk correction subfunction. Then, the receive end performs phase parameter adjustment on the phase correction subfunction based on the intermediate output data and the reference pilot symbol. In addition, the receive end determines, based on the intermediate output data and the phase correction subfunction, the corrected pilot symbol (that is, the pilot symbol on which crosstalk correction and phase correction are performed). Further, the receive end performs crosstalk parameter adjustment on the crosstalk correction subfunction based on the corrected pilot symbol and the reference pilot symbol. For specific processing, refer to the foregoing content.

Optionally, in the foregoing processing, intermediate output data on which first-level phase correction is performed is determined based on the intermediate output data and a phase correction subfunction on which parameter adjustment is performed. Then, based on the intermediate output data on which first-level phase correction is performed and the reference pilot symbol, parameter adjustment is performed again on the phase correction subfunction on which parameter adjustment is performed. Specifically, multi-level CR adjustment may be performed. In this embodiment of this application, second-level CR adjustment is used as an example for description.

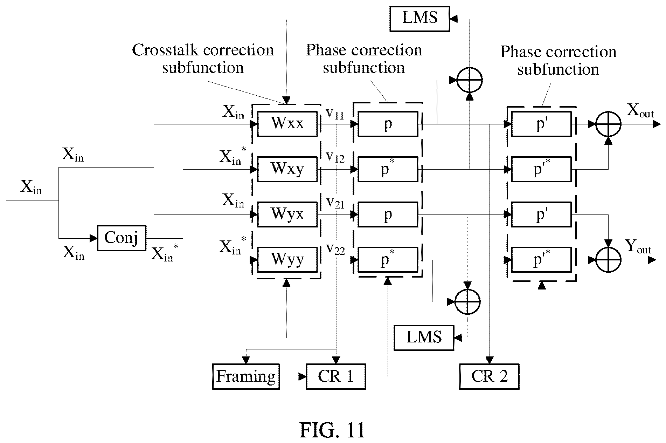

As shown in FIG. 11, Formula (26) and Formula (27) may continue to be used to perform second-level CR to further adjust the phase parameter and remove the phase error. In this case, $v_{11}(k)$, $v_{12}(k)$, $v_{21}(k)$, and $v_{22}(k)$ in Formula (26) are replaced with $v_{11}(k)p'(k)$, $v_{12}(k)p'^*(k)$, $v_{21}(k)p'(k)$, and $v_{22}(k)p'^*(k)$, and $p'(k)$ is a phase parameter obtained through first-level CR adjustment. A phase parameter obtained through second-level CR adjustment is $p_{res}(k)$, as shown in Formula (28):

$$p_{res}(k) = angle\left(Dec\left(\widehat{X_D(k)}\right)v_{11D}^*(k)\,p_D'^*(k) + Dec\left(Y_D^*(k)\right)v_{22D}\,p_D'(k)\right.$$
$$\left. + Dec\left(\widehat{X_D^*(k)}\right)v_{12D}(k)\,p_D'(k) + Dec\left(\widehat{Y_D(k)}\right)v_{21D}^*(k)\,p_D'^*(k)\right) \tag{28}$$

Dec (*) indicates that a decision is made on "*", and a corner mark D indicates a data unit.

205: The receive end determines the corrected data unit based on the data unit, the redundant code, and a correction function on which parameter adjustment is performed.

The receive end may input the data unit and the corresponding redundant code into the crosstalk correction subfunction on which parameter adjustment is performed to obtain the intermediate output data. Then, the receive end inputs the intermediate output data into the phase correction subfunction on which parameter adjustment is performed to obtain the corrected data unit, that is, the data unit on which crosstalk correction and phase correction are performed. Optionally, before phase correction is performed, the plurality of phase parameters calculated based on the pilot information and the reference pilot information may be obtained, and interpolation processing is performed based on the plurality of phase parameters, to determine a phase parameter corresponding to the data unit, so as to determine the phase correction subfunction on which parameter adjustment is performed.

Corresponding calculation formulas may be shown in Formula (29) and Formula (30):

$$\widehat{X_D(k)} = \vec{W}_{xx}^T(k)\,\vec{x}_{in}(k)\,p_D'(k) + \vec{W}_{xy}^T(k)\,\vec{x}_{in}^{\,*}(k)\,p_D'^*(k) \tag{29}$$

$$\widehat{Y_D(k)} = \vec{W}_{yx}^T(k)\,\vec{x}_{in}(k)\,p_D'(k) + \vec{W}_{yy}^T(k)\,\vec{x}_{in}^{\,*}(k)\,p_D'^*(k) \tag{30}$$

$\widehat{X_D(k)}$ and $\widehat{Y_D(k)}$ are corrected data units. The phase parameter $p_D'(k)$ is obtained by performing interpolation on phase parameters $p'(k)$ of a plurality of subframes.

Optionally, parameter adjustment may be performed on the crosstalk correction subfunction and the phase correction subfunction based on the corrected data unit. Corresponding processing is similar to parameter adjustment processing performed on the crosstalk correction subfunction based on the pilot information, and details are not described in this embodiment of this application.

The following describes a principle of using the frame structure shown in FIG. 8. The subframe structure is mainly for a case in which a quotient of dividing an input sampling rate by an output sampling rate of the crosstalk correction subfunction is not an integer.

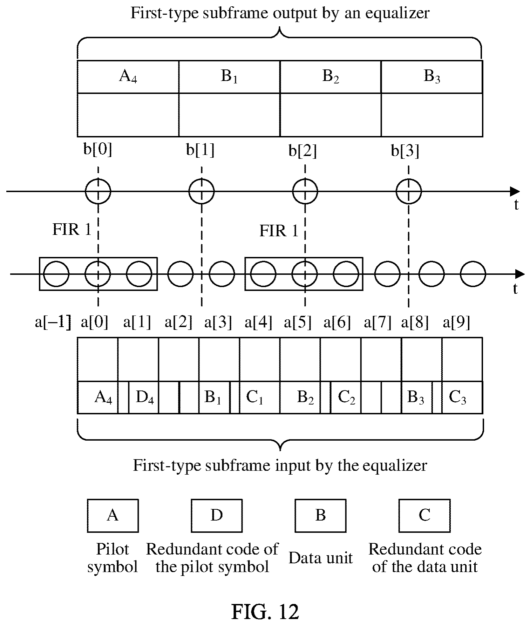

A case shown in FIG. 12 is used as an example. The input sampling rate is 1.25, and the output sampling rate is 0.5. Output sampling points b[n] of the crosstalk correction subfunction may be classified into two types: one type is b[2m], and the other type is b[2m+1], where m is any integer. For b[2m], input sampling points for calculating b[2m] are a[5m-1], a[5m], and a[5m+1], and b[2m] and a[5m] are aligned in terms of moments. For b[2m+1], input sampling points for calculating b[2m+1] are a[5m+1], a[5m+2], and a[5m+3], and b[2m+1] and a[5m+2] are not aligned in terms of moments. The two types of output sampling points b[2m] and b[2m+1] and corresponding input sampling points have a great difference in time relationships. Therefore, different functions, that is, Formula (6) and Formula (7), should be used to calculate the two types of output sampling points. The function may be generally referred to as a filter in actual use, and two filters may be denoted as an FIR 1 and an FIR 2 respectively. The FIR 1 is used to calculate b[2m], and the FIR 2 is used to calculate b[2m+1]. In actual use, parameter adjustment on the FIR 1 and the FIR 2 is independent of each other. A pilot symbol in the output b[2m] needs to be used to perform parameter adjustment on the FIR 1. A pilot symbol in the output b[2m+1] needs to be used to perform parameter adjustment on the FIR 2.

For the case shown in FIG. 12, b[0] output by the FIR 1 corresponds to a pilot symbol A4. In this case, parameter adjustment can be performed on the FIR 1 based on b[0] obtained through calculation. However, b[1] output by the FIR 2 does not correspond to a pilot symbol. In this case, parameter adjustment cannot be performed on the FIR 2.

If a subframe structure of another subframe is the same as that of a subframe in the figure, to be specific, a pilot symbol is also located at a header of the subframe, parameter adjustment cannot be performed on the FIR 2 in these subframes. As a result, a crosstalk correction effect of a data unit corresponding to b[2m+1] is poor.

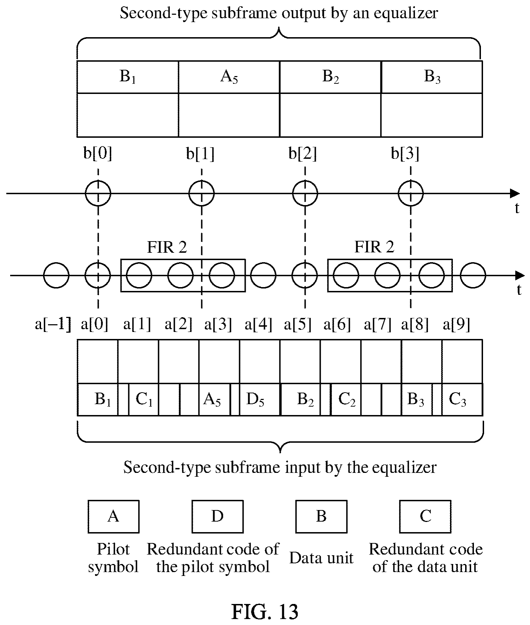

If a next subframe of the subframe shown in FIG. 12 uses a subframe structure shown in FIG. 13, to be specific, a pilot symbol is placed at a position of a 3rd symbol in the subframe, b[1] output by the FIR 2 corresponds to a pilot symbol A5. In this case, parameter adjustment can be performed on the FIR 2 based on b[1] obtained through calculation. Further, if subframes of the two subframe structures appear alternately, parameter adjustment can be always performed on the FIR 1 and the FIR 2. Therefore, the frame structure shown in FIG. 8 is used, so that parameter adjustment on a plurality of FIRs can be better ensured, and the crosstalk correction effect is improved.

The foregoing is described by using the case in which the input sampling rate is 1.25 and the output sampling rate is 0.5 as an example. For a more general scenario, it is assumed that each equalizer in MIMO equalization outputs Q output sampling points each time P input sampling points are input, where P and Q are relatively prime positive integers. In this case, there are Q different FIRs in this system, which correspond to Q groups of independently updated crosstalk parameters. A frame structure corresponding to a data frame may include Q types of subframes, positions for inserting reference pilot information in different types of subframes are different, and positions for inserting reference pilot information in a same type of subframe are the same. For example, for an nth type of subframe (where n=1, 2, ..., Q), a reference pilot symbol obtained through Alamouti encoding and a corresponding redundant code are inserted into a (2n-1)th symbol duration and a 2nth symbol duration.

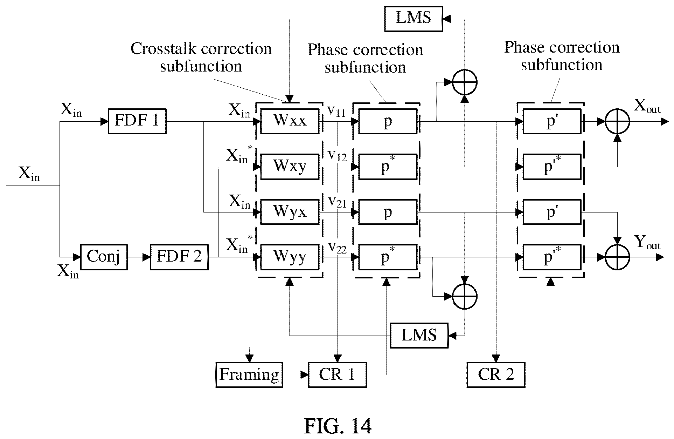

In addition, to resolve the foregoing problem, a fractional delay filter (fractional delay filter, FDF) may also be added before the FIR 2 to add a fractional delay to an input sampling point of the FIR 2, as shown in FIG. 14. After FDF adjustment, a fractional delay is added to the input sequence a[n] to obtain a'[n], as shown in Formula (31):

$$b[1] = h_2'[-1]a'[1] + h_2'[0]a'[2] + h_2'[1]a'[3] \quad (31)$$

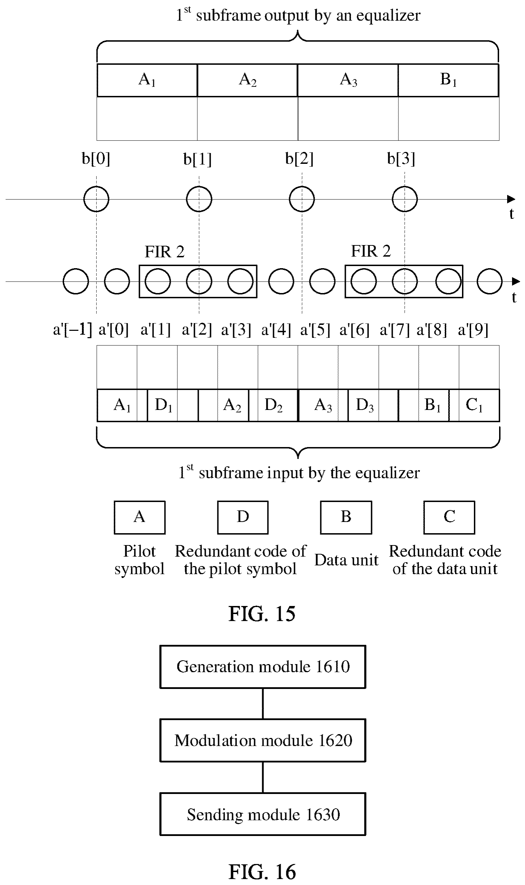

As shown in FIG. 15, in the sequence a'[n] to which the fractional delay is added, a'[2] and b[1] are aligned in terms of moments. Therefore, $h_1[k] = h_2'[k]$. In this way, only one group of crosstalk parameters needs to be jointly adjusted for each FIR. The FIR 1 uses a pilot symbol in the sequence a[n] to provide an error required for updating a crosstalk parameter of the FIR 1, and the FIR 2 uses a pilot symbol in the sequence a'[n] to which the fractional delay is introduced to provide an error required for updating a crosstalk parameter of the FIR 2.

Fractional delays provided by an FDF 1 and an FDF 2 are only determined by a sampling rate of MIMO equalization, and may be set in advance. Crosstalk parameters of the equalizers Wxx, Wxy, Wyx, and Wyy need to be adjusted by using the feedback algorithm such as LMS, which is described in detail in step 204.

The data transmission method provided in this embodiment of this application is not only used in a scenario with dual-polarization transmission and single-polarization reception, but also used in a case in which dual-polarization transmission and single-polarization reception coexist with dual-polarization reception in a time division multiple access (time division multiple access, TDMA) scenario. In a downlink transmission process, a central node sends a data frame to all leaf nodes in a broadcast manner, and signals sent to different leaf nodes are distinguished by using different slots. A frame structure of a data frame sent to a leaf node with single-polarization reception is the same as the foregoing frame structure, and details are not described herein again. A reference pilot symbol and a corresponding redundant code are also inserted into a data frame sent to a leaf node with dual-polarization reception, and a redundant code does not need to be generated for a data unit.

When receiving the data frame of a corresponding slot sent to the leaf node with dual-polarization reception, the leaf node with single-polarization reception may obtain the pilot symbol and the corresponding redundant code in the data frame, and then perform processing according to step 204 to perform parameter adjustment on a correction function. A case in which when the leaf node with single-polarization reception receives the data frame of the corresponding slot sent to the leaf node with dual-polarization reception, a capability of continuously updating a parameter to track a channel change is lost is avoided, thereby improving correction accuracy.

In addition to the foregoing coherent optical communication system of the P2MP architecture, the data transmission method provided in this embodiment of this application may also be applied to a coherent optical communication system of a point-to-point (point-to-point, P2P) architecture using a polarization-independent reception technology.

Data transmission is performed by using the data transmission method provided in this embodiment of this application. In a coherent optical transmission system with dual-polarization transmission and single-polarization reception, a transmit end sends a data frame including a subframe including reference pilot information, a data unit, and a corresponding redundant code, where a 1st subframe in each data frame includes more reference pilot symbols than other subframes. A receive end performs parameter adjustment on a correction function based on pilot information and the reference pilot information in the received data frame. This may increase a convergence speed of parameter adjustment, so that parameter adjustment on the correction function can adapt to a rapid change of interference in a more timely manner, thereby well eliminating interference introduced in a data transmission process.

Based on a same technical concept, an embodiment of this application further provides a data transmission apparatus. The apparatus is used in a transmit end of a coherent optical transmission system with dual-polarization transmission and single-polarization reception. As shown in FIG. 16, the apparatus may include a generation module 1610, a modulation module 1620, and a sending module 1630.

The generation module 1610 is configured to generate a data frame. A generation function in step 201 and another implicit step may be specifically implemented. The modulation module 1620 is configured to modulate the data frame onto an optical carrier to obtain an optical signal. A modulation function in step 202 and another implicit step may be specifically implemented. The sending module 1630 is configured to send the optical signal. A sending function in step 202 and another implicit step may be specifically implemented.

For features of a frame structure of the data frame and a structure of a subframe in the data frame, refer to FIG. 3 to FIG. 8 and related descriptions in the method embodiment.

The generation module 1610, the modulation module 1620, and the sending module 1630 may be implemented by a processor in the transmit end, or may be implemented by a processor in cooperation with a memory, or may be implemented by a processor by executing program instructions in a memory.

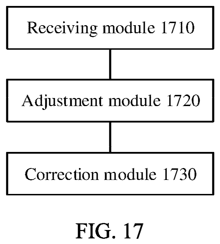

Based on a same technical concept, an embodiment of this application further provides a data transmission apparatus. The apparatus is used in a receive end of an optical transmission system with dual-polarization transmission and single-polarization reception. As shown in FIG. 17, the apparatus may include a receiving module 1710, an adjustment module 1720, and a correction module 1730.

The receiving module 1710 is configured to receive a data frame sent by a transmit end by using an optical signal. A receiving function in step 203 and another implicit step may be specifically implemented. The adjustment module 1720 is configured to perform parameter adjustment on a correction function based on pilot information and preset reference pilot information, where the correction function is used to correct, based on a redundant code, interference generated during transmission of a data unit. An adjustment function in step 204 and another implicit step may be specifically implemented. The correction module 1730 is configured to determine a corrected data unit based on the data unit, the redundant code, and a correction function on which parameter adjustment is performed. A correction function in step 205 and another implicit step may be specifically implemented.

For features of a frame structure of the data frame and a structure of a subframe in the data frame, refer to related descriptions in the method embodiment.

Optionally, the adjustment module 1720 may be configured to: determine a corrected pilot symbol based on a pilot symbol, a redundant code corresponding to the pilot symbol, and the correction function, and perform parameter adjustment on the correction function based on the corrected pilot symbol and a reference pilot symbol. An adjustment function in step 204 and another implicit step may be specifically implemented.

Optionally, the correction function includes a phase correction subfunction and a crosstalk correction subfunction.

The adjustment module 1720 may be configured to input the pilot symbol and the redundant code corresponding to the pilot symbol into the crosstalk correction subfunction to obtain intermediate output data, determine the corrected pilot symbol based on the intermediate output data and the phase correction subfunction, and then perform parameter adjustment on the crosstalk correction subfunction based on the corrected pilot symbol and the reference pilot symbol. Crosstalk parameter adjustment in step 204 and another implicit step may be specifically implemented.

Optionally, the adjustment module 1720 may be further configured to perform parameter adjustment on the phase correction subfunction based on the intermediate output data and the reference pilot symbol. Phase parameter adjustment in step 204 and another implicit step may be specifically implemented.

The receiving module 1710, the adjustment module 1720, and the correction module 1730 may be implemented by a processor in the receive end, or may be implemented by a processor in cooperation with a memory, or may be implemented by a processor by executing program instructions in a memory.

Data transmission is performed by using the data transmission apparatus provided in this embodiment of this application. In a coherent optical transmission system with dual-polarization transmission and single-polarization reception, a transmit end sends a data frame including a subframe including reference pilot information, a data unit, and a corresponding redundant code, where a 1st subframe in each data frame includes more reference pilot symbols than other subframes. A receive end performs parameter adjustment on a correction function based on pilot information and the reference pilot information in the received data frame. This may increase a convergence speed of parameter adjustment, so that parameter adjustment on the correction function can adapt to a rapid change of interference in a more timely manner, thereby well eliminating interference introduced in a data transmission process.

When the data transmission apparatus provided in the foregoing embodiment performs data transmission, only division of the foregoing functional modules is used as an example for description. During actual application, the foregoing functions may be allocated to different functional modules and implemented based on a requirement. In other words, an inner structure of the data transmission apparatus is divided into different functional modules to implement all or some of the functions described above. In addition, the data transmission apparatus provided in the foregoing embodiment and the data transmission method embodiment belong to a same idea. For a specific implementation process of the apparatus, refer to the method embodiment. Details are not described herein again.

All or some of the foregoing embodiments may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on a device, all or some of the processes or functions according to embodiments of this application are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a device, or a data storage device, such as a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive).

Terms used in implementations of the present disclosure are merely used to explain embodiments of the present disclosure, but are not intended to limit the present disclosure. Unless otherwise defined, technical terms or scientific terms used in the implementations of the present disclosure should have common meanings understood by a person of ordinary skill in the art to which the present disclosure pertains. The terms "first", "second", and the like used in the specification and claims of the present disclosure do not indicate any order, quantity, or significance, but are merely intended to distinguish between different components. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and their equivalents listed after the "include" or "comprise", and other elements or objects are not excluded. "Upper", "lower", "left", "right", or the like is only used to indicate a relative position relationship. When an absolute position of a described object changes, the relative position relationship may also change correspondingly. "A plurality of" means two or more, unless otherwise specified.

The foregoing descriptions are merely embodiments of this application, but are not intended to limit this application. Any modification, equivalent replacement, or improvement made without departing from the principle of this application should fall within the protection scope of this application.

Information (including but not limited to user equipment information, user personal information, and the like), data (including but not limited to data used for analysis, stored data, displayed data, and the like), and signals (including but not limited to signals transmitted between a user terminal and another device, and the like) in this application are used under authorization by the user or full authorization by all parties, and capturing, use, and processing of related data need to conform to related laws, regulations, and standards of related countries and regions.

**Claims**

1. A data transmission method, applied to a transmit end of a coherent optical transmission system with dual-polarization transmission and single-polarization reception, wherein the method comprises:

   generating a data frame, wherein the data frame comprises a plurality of subframes, at least one of the plurality of subframes comprises reference pilot information, at least one data unit, and at least one redundant code corresponding to the at least one data unit, the reference pilot information is at a specified position in the subframe to which the reference pilot information belongs, reference pilot information in a 1st subframe in the data frame comprises a first quantity of reference pilot symbols, reference pilot information in each subframe other than the 1st subframe in the data frame comprises a second quantity of reference pilot symbols, the first quantity is greater than the second quantity, the reference pilot information is used to perform parameter adjustment on a correction function, and the correction function is used to correct, based on the redundant code, interference generated during transmission of the data unit;
   modulating the data frame onto an optical carrier to obtain an optical signal; and

sending the optical signal.

2. The method according to claim 1, wherein the reference pilot information comprises a reference pilot symbol and a redundant code corresponding to the reference pilot symbol.

3. The method according to claim 1 or 2, wherein in the 1st subframe in the data frame, the specified position is a header of the subframe.

4. The method according to any one of claims 1 to 3, wherein for a plurality of subframes other than the 1st subframe in the data frame, each of the plurality of subframes corresponds to one specified position, all specified positions corresponding to the plurality of subframes are classified into N specified positions, and the N specified positions appear in turn in the data frame.

5. The method according to any one of claims 1 to 3, wherein for a plurality of subframes other than the 1st subframe in the data frame, a specified position of each of the plurality of subframes is a header of the subframe.

6. The method according to any one of claims 1 to 5, wherein the 1st subframe in the data frame comprises only the reference pilot information.

7. The method according to any one of claims 1 to 6, wherein the redundant code is an Alamouti code.

8. A data transmission method, applied to a receive end of a coherent optical transmission system with dual-polarization transmission and single-polarization reception, wherein the method comprises:

   receiving a data frame sent by a transmit end by using an optical signal, wherein the data frame comprises a plurality of subframes, at least one of the plurality of subframes comprises pilot information, at least one data unit, and at least one redundant code corresponding to the at least one data unit, the pilot information is at a specified position in the subframe to which the pilot information belongs, pilot information in a 1st subframe in the data frame comprises a first quantity of pilot symbols, pilot information in each subframe other than the 1st subframe in the data frame comprises a second quantity of pilot symbols, and the first quantity is greater than the second quantity;
   performing parameter adjustment on a correction function based on the pilot information and preset reference pilot information, wherein the correction function is used to correct, based on the redundant code, interference generated during transmission of the data unit; and
   determining a corrected data unit based on the data unit, the redundant code, and a correction function on which parameter adjustment is performed.

9. The method according to claim 8, wherein the pilot information comprises a pilot symbol and a redundant code corresponding to the pilot symbol, and the reference pilot information comprises a reference pilot symbol.

10. The method according to claim 9, wherein performing parameter adjustment on the correction function based on the pilot information and the preset reference pilot information comprises:

    determining a corrected pilot symbol based on the pilot symbol, the redundant code corresponding to the pilot symbol, and the correction function; and
    performing parameter adjustment on the correction function based on the corrected pilot symbol and the reference pilot symbol.

11. The method according to claim 10, wherein the correction function comprises a phase correction subfunction and a crosstalk correction subfunction;
    determining the corrected pilot symbol based on the pilot symbol, the redundant code corresponding to the pilot symbol, and the correction function comprises:

    inputting the pilot symbol and the redundant code corresponding to the pilot symbol into the crosstalk correction subfunction to obtain intermediate output data; and
    determining the corrected pilot symbol based on the intermediate output data and the phase correction subfunction; and
    performing parameter adjustment on the correction function based on the corrected pilot symbol and the reference pilot symbol comprises:

performing parameter adjustment on the crosstalk correction subfunction based on the corrected pilot symbol and the reference pilot symbol.

12. The method according to claim 11, wherein after inputting the pilot symbol and the redundant code corresponding to the pilot symbol into the crosstalk correction subfunction to obtain the intermediate output data, the method further comprises:
performing parameter adjustment on the phase correction subfunction based on the intermediate output data and the reference pilot symbol.

13. The method according to any one of claims 8 to 12, wherein in the 1st subframe in the data frame, the specified position is a header of the subframe.

14. The method according to any one of claims 8 to 13, wherein for a plurality of subframes other than the 1st subframe in the data frame, each of the plurality of subframes corresponds to one specified position, all specified positions corresponding to the plurality of subframes are classified into N specified positions, and the N specified positions appear in turn in the data frame.

15. A data transmission apparatus, wherein the apparatus comprises at least one module, and the at least one module is configured to perform the method according to any one of claims 1 to 14.

16. An optical network device, wherein the optical network device comprises a memory and a processor, and the memory is configured to store computer instructions; and
the processor executes the computer instructions stored in the memory, to enable the optical network device to perform the method according to any one of claims 1 to 14.

17. A computer-readable storage medium, wherein the computer-readable storage medium stores computer program code, and in response to the computer program code being executed by an optical network device, the optical network device performs the method according to any one of claims 1 to 14.

**FIG. 1**

**FIG. 2**

FIG. 3

FIG. 4

FIG. 5

FIG. 6

**FIG. 7**

**FIG. 8**

FIG. 9

1st subframe output by an equalizer

| A₁ | A₂ | A₃ | B₁ |
|----|----|----|----|
|    |    |    |    |

b[0]    b[1]    b[2]    b[3]

FIR 1         FIR 1

a[−1] a[0] a[1] a[2] a[3] a[4] a[5] a[6] a[7] a[8] a[9]

| A₁ | D₁ |  | A₂ | D₂ | A₃ | D₃ |  | B₁ | C₁ |

1st subframe input by the equalizer

| A | D | B | C |

Pilot symbol | Redundant code of the pilot symbol | Data unit | Redundant code of the data unit

FIG. 10

FIG. 11

First-type subframe output by an equalizer

| $A_4$ | $B_1$ | $B_2$ | $B_3$ |
|-------|-------|-------|-------|
|       |       |       |       |

b[0]  b[1]  b[2]  b[3]

FIR 1    FIR 1

a[−1]  a[0]  a[1]  a[2]  a[3]  a[4]  a[5]  a[6]  a[7]  a[8]  a[9]

| $A_4$ | $D_4$ | | $B_1$ | $C_1$ | $B_2$ | $C_2$ | | $B_3$ | $C_3$ |

First-type subframe input by the equalizer

| A | D | B | C |
|---|---|---|---|

Pilot symbol    Redundant code of the pilot symbol    Data unit    Redundant code of the data unit

**FIG. 12**

Second-type subframe output by an equalizer

| B₁ | A₅ | B₂ | B₃ |
|---|---|---|---|
| | | | |

b[0]  b[1]  b[2]  b[3]

FIR 2   FIR 2

a[−1] a[0]  a[1]  a[2]  a[3]  a[4]  a[5]  a[6]  a[7]  a[8]  a[9]

| | B₁ | C₁ | | A₅ | D₅ | B₂ | C₂ | | B₃ | C₃ |
|---|---|---|---|---|---|---|---|---|---|---|

Second-type subframe input by the equalizer

| A | D | B | C |
|---|---|---|---|
| Pilot symbol | Redundant code of the pilot symbol | Data unit | Redundant code of the data unit |

FIG. 13

FIG. 14

1st subframe output by an equalizer

| $A_1$ | $A_2$ | $A_3$ | $B_1$ |
|---|---|---|---|

b[0]    b[1]    b[2]    b[3]

FIR 2                    FIR 2

a'[−1] a'[0]  a'[1]  a'[2]  a'[3]  a'[4]  a'[5]  a'[6]  a'[7]  a'[8]  a'[9]

| $A_1$ | $D_1$ | | $A_2$ | $D_2$ | $A_3$ | $D_3$ | | $B_1$ | $C_1$ |
|---|---|---|---|---|---|---|---|---|---|

1st subframe input by the equalizer

| A | D | B | C |
|---|---|---|---|

Pilot symbol | Redundant code of the pilot symbol | Data unit | Redundant code of the data unit

FIG. 15

Generation module 1610

Modulation module 1620

Sending module 1630

FIG. 16

Receiving module 1710

Adjustment module 1720

Correction module 1730

FIG. 17

## INTERNATIONAL SEARCH REPORT

| International application No. |
|---|
| **PCT/CN2024/075739** |

**A. CLASSIFICATION OF SUBJECT MATTER**

H04B10/61(2013.01)i

According to International Patent Classification (IPC) or to both national classification and IPC

**B. FIELDS SEARCHED**

Minimum documentation searched (classification system followed by classification symbols)

IPC:H04B,H04L

Documentation searched other than minimum documentation to the extent that such documents are included in the fields searched

Electronic data base consulted during the international search (name of data base and, where practicable, search terms used)

CNTXT, ENTXT, ENTXTC: 补偿, 校准, 修正, 串扰, 相位, 数量, 小于, 大于, 偏振, 相干, 导频, 第二, 第一, 调整, 光传输, 冗余, 帧, 子帧, alamouti, coheren+, frame, subframe, interference, ISI, number, quantity, phase, pilot, polar+, correct+, compensat+

**C. DOCUMENTS CONSIDERED TO BE RELEVANT**

| Category* | Citation of document, with indication, where appropriate, of the relevant passages | Relevant to claim No. |
|---|---|---|
| A | CN 114978337 A (HUAWEI TECHNOLOGIES CO., LTD.) 30 August 2022 (2022-08-30) description, paragraphs [0029]-[0033], [0156]-[0163], and [0859]-[0868] | 1-17 |
| A | CN 110247712 A (NOKIA SOLUTIONS AND NETWORKS OY) 17 September 2019 (2019-09-17) entire document | 1-17 |
| A | US 2015372766 A1 (NIPPON TELEGRAPH AND TELEPHONE CORP.) 24 December 2015 (2015-12-24) entire document | 1-17 |
| A | US 2016056934 A1 (ZTE CORP.) 25 February 2016 (2016-02-25) entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 May 2024** | **10 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/075739**

| Patent document cited in search report | | | Publication date (day/month/year) | Patent family member(s) | | | Publication date (day/month/year) |
|---|---|---|---|---|---|---|---|
| CN | 114978337 | A | 30 August 2022 | WO | 2022222933 | A1 | 27 October 2022 |
| | | | | KR | 20230170777 | A | 19 December 2023 |
| | | | | EP | 4318977 | A1 | 07 February 2024 |
| | | | | CN | 116566498 | A | 08 August 2023 |
| | | | | CN | 116388881 | A | 04 July 2023 |
| | | | | CN | 116683996 | A | 01 September 2023 |
| | | | | CN | 117118524 | A | 24 November 2023 |
| | | | | JP | 2024515195 | A | 05 April 2024 |
| CN | 110247712 | A | 17 September 2019 | US | 2019280778 | A1 | 12 September 2019 |
| US | 2015372766 | A1 | 24 December 2015 | EP | 2942917 | A1 | 11 November 2015 |
| | | | | WO | 2014126132 | A1 | 21 August 2014 |
| | | | | CN | 104969524 | A | 07 October 2015 |
| | | | | JP | 6075902 | B2 | 08 February 2017 |
| US | 2016056934 | A1 | 25 February 2016 | EP | 2983430 | A1 | 10 February 2016 |
| | | | | WO | 2014161389 | A1 | 09 October 2014 |
| | | | | CN | 104105138 | A | 15 October 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310268458